(19) Europäisches Patentamt
European Patent Office
Office européen des brevets

(11) **EP 1 441 879 B1**

(12) **EUROPÄISCHE PATENTSCHRIFT**

(45) Veröffentlichungstag und Bekanntmachung des Hinweises auf die Patenterteilung:
**13.12.2006 Patentblatt 2006/50**

(21) Anmeldenummer: 02802606.0

(22) Anmeldetag: **05.11.2002**

(51) Int Cl.:
***B23Q 11/00*** *(2006.01)*   ***B23Q 1/70*** *(2006.01)*
***B23Q 17/22*** *(2006.01)*   ***G01B 5/00*** *(2006.01)*

(86) Internationale Anmeldenummer:
**PCT/DE2002/004099**

(87) Internationale Veröffentlichungsnummer:
**WO 2003/039810 (15.05.2003 Gazette 2003/20)**

(54) **MASCHINE MIT TEMPERATURKOMPENSIERTER ARBEITSSPINDEL**

MACHINE EQUIPPED WITH A TEMPERATURE COMPENSATED LATHE SPINDLE

MACHINE DOTEE D'UN ARBRE MOTEUR A COMPENSATION DE TEMPERATURE

(84) Benannte Vertragsstaaten:
**AT BE BG CH CY CZ DE DK EE ES FI FR GB GR IE IT LI LU MC NL PT SE SK TR**

(30) Priorität: **09.11.2001 DE 10155078**

(43) Veröffentlichungstag der Anmeldung:
**04.08.2004 Patentblatt 2004/32**

(73) Patentinhaber: **Walter Maschinenbau GmbH 72072 Tübingen (DE)**

(72) Erfinder: **ENGELFRIED, Thomas 73666 Baltmannsweiler (DE)**

(74) Vertreter: **Rüger, Barthelt & Abel Patentanwälte Postfach 10 04 61 73704 Esslingen a. N. (DE)**

(56) Entgegenhaltungen:
EP-A- 0 349 783          DE-A- 4 115 564
US-A- 4 449 085

• PATENT ABSTRACTS OF JAPAN vol. 010, no. 265 (M-515), 10. September 1986 (1986-09-10) & JP 61 088015 A (NIPPON SEIKO KK), 6. Mai 1986 (1986-05-06)

**Beschreibung**

Die Erfindung betrifft eine Maschine zur Bearbeitung eines Werkstücks mit einem umlaufenden oder drehenden Werkzeug.

Zur Präzisionsbearbeitung von Werkstücken, beispielsweise zum Schleifen, ist es erforderlich, das an einer Arbeitsspindel gehaltene Schleifwerkzeug mit einer Präzision zuzustellen, die der gewünschten Präzision des Arbeitsergebnisses entspricht. Die Arbeitsspindel ist in der Regel über ein oder mehrere Positioniereinrichtungen an einem Maschinengestell gelagert. Die Positioniereinrichtungen erfassen die Position der Arbeitsspindel. Um Ungenauigkeiten in der Positionierung auszuschalten, die von Temperaturänderungen des Maschinengestells herrühren können, werden Maschinengestelle gelegentlich mit Temperatursensoren versehen, deren Signale von eine Steuereinheit berücksichtigt werden, die der Ansteuerung der Positionierantriebe dient. Jedoch können damit Ungenauigkeiten nicht erfasst werden, die sich durch Temperaturänderung zwischen der Eingriffsstelle des Werkzeugs, beispielsweise des Schleifwerkzeugs, und der festen Lagerung der Arbeitsspindel ergeben. In solchen Fällen ist es deshalb erforderlich, mit dem Schleifwerkzeug häufig einen Messtaster anzufahren, um die Maschine neu zu kalibrieren. Dies kostet Bearbeitungszeit.

Aus der EP-A-0 349 783 ist die Überwachung einer Temperatur an der Arbeitsspindel einer Werkzeugmaschine mittels eines wärmeempfindlichen Widerstandes bekannt. Dieser ist in eine Nut der zu überwachenden Welle eingelassen. Ein berührungsloser Messwertübertrager dient dabei zur Übertragung der Messwerte von einem ruhenden Träger auf die drehende Welle und zurück. Der Messwertübertrager weist somit eine stationäre, mit dem Träger verbundene Hälfte und eine umlaufende, mit der Welle verbundene Hälfte auf, die mit dem Messwiderstand verbunden ist.

Aus der US-A-4 449 085 ist die Überwachung der Temperatur eines Werkstücks an einer Drehmaschine bekannt. Zur Temperaturüberwachung wird eine in unmittelbarer Nähe des Drehmeißels liegender Bereich des Werkstücks mit einem infrarotempfindlichen Sensor beobachtet. Übersteigt die von dem Werkstück ausgehende Infrarot-Strahlung ein vorbestimmtes Maß, wird ein entsprechendes Alarmsignal abgegeben.

Aus der DE-A-41 15 564 ist eine temperaturkompensierte Arbeitsspindel für eine Schleifmaschine bekannt. Die Arbeitsspindel ist in einem Kegellager gelagert, dessen Kegelwinkel so bemessen ist, dass die Spitze des Kegels in der Mitte der Schleifscheibe liegt. Auf diese Weise bewirkt eine thermische Ausdehnung der Welle, die zugleich eine Ausdehnung in Axialrichtung und in Radialrichtung bedeutet, eine axiale Verlagerung der Welle, die die thermische Ausdehnung derselben genau kompensiert.

Davon ausgehend ist es Aufgabe der Erfindung, eine Maschine zur Bearbeitung eines Werkstücks mit einem umlaufenden oder drehenden Werkzeug zu schaffen, die eine erhöhte Bearbeitungsgenauigkeit und/oder eine verbesserte Zeitausnutzung ermöglicht.

Diese Aufgabe wird mit der Maschine gemäß Anspruch 1 gelöst. Die erfindungsgemäße Maschine weist eine berührungslos arbeitende Temperaturerfassungseinrichtung auf, die ein die Temperatur der Welle kennzeichnendes Signal erzeugt. Dabei wird die Temperatur wenigstens an einer Stelle der Welle erfasst. Somit können Temperaturänderungen der Welle der Arbeitsspindel, die zu einer Längenänderung derselben führen, von der Steuereinrichtung bei der Positionierung des Werkzeugs oder des Werkstücks berücksichtigt werden. Dies hat insbesondere Bedeutung bei Bearbeitungsvorgängen, die zu wechselnden Wellentemperaturen führen. Solches ist beispielsweise gegeben, wenn Bearbeitungsvorgänge mit unterschiedlichem Energieumsatz einander abwechseln. Wird-beispielsweise eine Maschine eingerichtet und sind die Schleifvorgänge hier relativ kurz und werden sie zu Messzwecken wieder und wieder unterbrochen, schwankt die Spindeltemperatur relativ stark und bleibt im Mittel eher niedrig. Läuft die Maschine hingegen in der Produktion mit vollem Einsatz kann die Spindeltemperatur ansteigen. Die Temperaturdifferenz kann hier einen Wert von 10 k übersteigen. Diese Temperaturänderungen ergeben im μm-Bereich liegende Längenänderungen der Welle. Die Steuereinrichtung erfasst diese und korrigiert die Längenänderung, indem sie die Längenänderung bei der Bildung der Vorgabewerte aus den Steuerwerten berücksichtigt. Wird beispielsweise eine Temperaturerhöhung erfasst, die zu einer Längenzunahme der Welle von 1 μm führt, werden die Vorgabewerte bezügl. der Positionierung der Arbeitsspindel bezügl. ihrer Längsrichtung um den gleichen Betrag, nämlich 1 μm gegensinnig korrigiert, z.B. vermindert. Dieser Vorgang kann fortwährend ablaufen und beispielsweise in einem Zeittakt von einigen 10 Millisekunden ständig wiederholt werden. Auf diese Weise können auch kurzfristige Temperaturänderungen erfasst und ausgeschaltet werden, bevor sie wirksam werden. Die Kompensation der Temperatur der Welle erfolgt somit im Wege einer Steuerung. Die gemessenen Temperaturen werden über eine Zuordnungstabelle, die in einer zu der Steuereinrichtung gehörigen Speichereinrichtung vorhanden ist, in Längenänderungswerte umgesetzt. Die Zuordnungstabelle kann werkzeugabhängig variiert werden, um Längenänderungen, die aus dem Werkzeug herrühren, zusätzlich zu erfassen. An Stelle der Zuordnungstabelle können auch Berechnungsformeln angewendet werden, die aus der gemessenen Temperaturerhöhung oder - änderung eine Längenzunahme oder -änderung berechnen.

Die erfinderische Idee ist grundsätzlich an jeder Maschine zur spanenden Bearbeitung eines Werkstücks anwendbar. Besonders vorteilhaft anwendbar ist sie bei einer Schleifmaschine, die zusätzlich zur elektroerosiven Bearbeitung eingerichtet ist. Während die elektroerosive Bearbeitung bei relativ geringer Drehzahl von beispielsweise 200 Umdrehungen pro Minute stattfindet und an dem Werkzeug nur relativ wenig Wärme erzeugt, findet ein Schleifvorgang bei wesentlich höheren Drehzahlen von beispielsweise 3000 Umdrehungen und mit direkter Berührung zwischen dem Werkzeug und dem Werkstück statt, wodurch relativ viel Wärme erzeugt wird. Die Temperaturerfassung und Kompensation der Welle schafft hier eine besonders hohe Bearbeitungsgenauigkeit.

Die Temperaturerfassung an der Weile erfolgt über einen strahlungsempfindlichen Temperatursensor berührungslos. Die berührungslose Erfassung gestattet die Temperaturmessung auf schnelle und präzise Weise, sowie während des Betriebs der Maschine. Dabei ist der Sensor, so ausgerichtet, dass ein Abschnitt der Welle seinen Erfassungsbereich vollständig einnimmt. Damit erfasst der strahlungsempfindliche Sensor die mittlere Temperatur eines zylindrischen Abschnitts der Welle. Vorzugsweise liegt der von dem Sensor erfasste Wellenabschnitt zwischen dem Arbeitswerkzeug und einer Lagereinrichtung, die die Axialposition der Welle bestimmt. Dadurch erfasst der Sensor gerade den Bereich der Welle, dessen Längenänderung bei Nichtkompensation die Bearbeitungsgenauigkeit beeinträchtigen würde.

Bei einer vorteilhaften Ausführungsform sind wenigstens zwei Temperatursensoren vorgesehen, die die Temperatur der Welle auf beiden Seiten der axialfesten Lagereinrichtung erfassen. Diese Ausführungsform hat den Vorteil, dass die Welle an beiden Enden wenigstens ein Werkzeug tragen kann und beide unterschiedlich langen Wellenabschnitte in ihrer Temperaturdehnung kompensiert werden können. Des Weiteren ergibt sich der Vorteil, dass, wenn beide Sensoren unterschiedliche Temperaturen anzeigen, auf eine Temperaturverteilung in der Welle geschlossen werden kann, wodurch die Längenänderungskompensation noch präzisiert werden kann. Im einfachsten Fall kann dies beispielsweise durch eine lineare Näherung geschehen. Zeigen beide Sensoren die gleiche Temperatur an wird angenommen, dass die Welle insgesamt auf einer einheitlichen (erhöhten) Temperatur ist. Von dieser Annahme ausgehend werden die gemessenen Temperaturwerte zur Berechnung oder anderweitigen Bestimmung der auftretenden Längenzunahme herangezogen, die es zu kompensieren gilt. Zeigt jedoch beispielsweise ein Sensor eine höhere und der andere Sensor eine niedrigere Temperatur an, kann angenommen werden, dass entlang der Welle ein beispielsweise konstantes Temperaturgefälle herrscht, wobei die Änderung der Länge dann aufgrund dieses Temperaturgefälles berechnet oder bestimmt werden kann.

Erfindungsgemäß sind wenigstens die Wellenabschnitte, die im Erfassungsbereich liegen, mit einer reflexionsarmen Oberfläche, beispielsweise einer Oberflächenbeschichtung versehen. Beispielsweise kann die Welle brüniert werden. Dies vermeidet störende Lichtreflexe und ermöglicht eine sichere Temperaturerfassung. Dabei ist es sowohl möglich, einen zylindrischen Bereich oder die gesamte Welle zu brünieren als auch die Welle lediglich bereichsweise mit einer matten oder geschwärzten oder brünierten oder anderweitig beschichteten Oberfläche zu versehen. Beispielsweise können an der Welle Längsstreifen angebracht sein, die durch das Sichtfeld (Erfassungsbereich) des Sensors laufen, wenn sich die Welle dreht. Dies hat den Vorteil, dass die Sensoren ein Wechselsignal abgeben, dessen Amplitude ein Maß für Temperatur ist. Somit können Gleichanteile und Drifteffekte, die sich aus Alterung oder Temperaturänderung des Sensors selbst ergeben, auf einfache Weise ausgefiltert werden.

Zusätzlich kann die Maschine mit Temperatursensoren am Maschinengestell versehen sein, um Temperaturänderungen des Maschinengestells zu erfassen und zu kompensieren. In Verbindung mit der Temperaturkompensation der Welle ergibt sich eine besonders hohe Präzision.

Weitere Einzelheiten der Erfindung können der Zeichnung, der Beschreibung oder den Unteransprüchen entnommen werden. In der Zeichnung ist ein Ausführungsbeispiel der Erfindung veranschaulicht:

Fig. 1    eine Maschine zur Bearbeitung eines Werkstücks in schematisierter Vorderansicht,

Fig. 2    die Arbeitsspindel der Maschine nach Figur 1 in schematisierter Schnittdarstellung,

Fig. 3    eine Steuereinrichtung für die Maschine nach Figur 1 in schematisierter Darstellung,

Fig. 4    ein auf der Maschine nach Figur 1 zu bearbeitendes Werkzeug, das hier das Werkstück bildet,

Fig. 5,6    das Werkzeug nach Figur 4 in unterschiedlichen Bearbeitungsstadien und

Fig. 7    Längenänderungen der Arbeitsspindel über der Zeit während der Bearbeitung mit und ohne Temperaturkompensation im Vergleich.

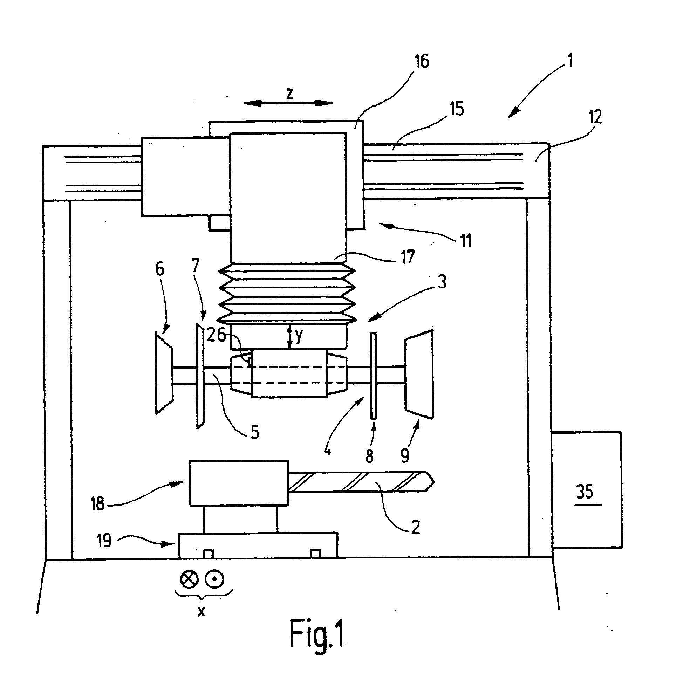

In Figur 1 ist eine als Schleifmaschine ausgebildete Maschine 1 veranschaulicht, die zur Bearbeitung von Werkzeugen 2, wie beispielsweise Bohrern, Fräsern und dergleichen dient. Die Werkzeuge 2 sind somit im vorliegenden Zusammenhang die Werkstücke. Zur Bearbeitung derselben dient bei der vorliegenden beispielhaften Maschine ein kombinierter Schleif- und Erodierkopf 3, der eine Arbeitsspindel 4 aufweist. Zu dieser gehört eine Welle 5, die Werkzeuge 6, 7, 8, 9 trägt. Die Werkzeuge 6, 7, 8, 9 können Schleifwerkzeuge, Erodierwerkzeuge oder ähnliches sein.

Der Schleif- und Erodierkopf 3 ist über eine Positioniereinrichtung 11 an einem Maschinengestell 12 gehalten. Zu der Positioniereinrichtung 11 gehört beispielsweise eine Horizontalpositioniereinrichtung 14, die durch eine Horizontalführung 15, einen daran gelagerten Schlitten 16 und eine zugehörige Antriebseinrichtung gebildet ist. Die Horizontalpositioniereinrichtung 14 dient zur Positionierung des Schleif- und Erodierkopfs 3 in Z-Richtung.

Der Schlitten 16 trägt eine Vertikalpositioniereinrichtung 17, zu der wiederum eine Führung und eine Antriebseinrichtung, sowie entsprechende Positionssensoren gehören. Sie dient der Positionierung des Schleif- und Erodierkopfs 3 in Y-Richtung.

Auf dem Maschinengestell ist außerdem eine Spanneinrichtung 18 für das Werkzeug 2 gelagert. Die Spanneinrichtung 18 kann dabei über eine weitere Horizontalpositioniereinrichtung 19 in X-Richtung positionierbar gehalten sein. Außerdem können weitere nicht veranschaulichte Schwenk- oder Drehpositioniereinrichtungen vorgesehen sein, um den Schleif- und Erodierkopf 3, sowie das Werkzeug 2 in Bezug aufeinander in den drei Linearachsenrichtungen X, Y, Z, sowie in ein, zwei oder drei Schwenkrichtungen in Bezug aufeinander positionieren zu können.

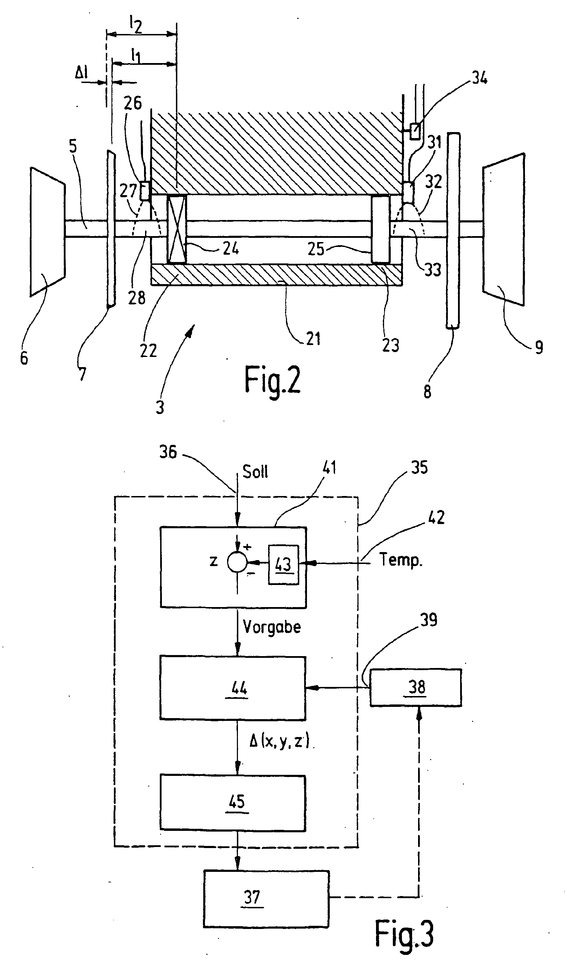

Der Erodier- und Schleifkopf 3 ist in Figur 2 gesondert geschnitten dargestellt. Sein Grundträger 21 weist zwei Lagersitze 22, 23 auf, die jeweils eine Lagereinrichtung 24, 25 halten. Die Lagereinrichtung 24 ist ein Wälzlager, das die Welle 5 drehbar jedoch axial unverschiebbar lagert. Die Lagereinrichtung 25 ist ein Wälzlager, das die Welle 5 drehbar dabei aber in zumindest geringem Maß axial verschiebbar lagert. Die Lager sind mit einer nicht weiter veranschaulichten Dichtungseinrichtung nach außen hin abgedichtet. Dazu gehört evtl. auch eine nicht dargestellte Sperrlustzuführung, die einen nach außen gerichteten Luftstrom erzeugt. Ein solcher kann dazu führen, dass der Grundträger 21 und die Lagereinrichtungen 24, 25 kälter bleiben als die Welle 5.

Dem Schleifwerkzeug wird während des Betriebs in der Regel Kühlschmiermittel zugeführt, das eine zu starke Erhitzung des Schleifwerkzeugs verhindern soll. Das Kühlschmiermittel, dessen Temperatur sich im Verlauf eines Arbeitstags deutlich ändern kann, erzeugt an dem Schleifwerkzeug und sonstigen Maschinenteilen in der Regel relativ große Temperaturgradienten, bzw. Temperaturunterschiede. Dadurch kann sich die Temperatur der Welle 5 deutlich von der Temperatur der Lagereinrichtungen 24, 25 und des Grundträgers 21 unterscheiden. Wird ein Kühlschmiermittelstrom der das Schleifwerkzeug und auch die Welle trifft ein- oder ausgeschaltet oder auch nur geändert, kann dies relativ kurzfristige Temperaturänderungen der Welle 5 zur Folge haben.

Der Grundträger 21 trägt einen strahlungsempfindlichen Temperatursensor 26, der einen in Figur 2 gestrichelt angedeuteten Erfassungsbereich 27 hat. Der Temperatursensor 26 erfasst die Temperaturstrahlung innerhalb seines Erfassungsbereichs 26 und somit die von einem Wellenabschnitt 28 ausgesandte Wärmestrahlung. Der Temperatursensor 26 ist so angeordnet, dass der im Erfassungsbereich 27 liegende Wellenabschnitt 28 zwischen der Lagereinrichtung 24 und dem Werkzeug 6 oder 7 liegt. Durch die direkte Temperaturerfassung der drehenden Welle können auch sehr kurzfristige Temperaturänderungen der Welle 5, wie sie durch das Kühlschmiermittel verursacht werden können, erfasst und, wie später erläutert, sofort ausgeregelt werden.

Bedarfsweise kann an dem Grundträger 21 ein weiterer Temperatursensor 31 vorgesehen sein, dessen Erfassungsbereich 32 von einem Wellenabschnitt 33 eingenommen ist. Der Temperatursensor 31 kann dabei so angeordnet sein, dass er die Temperatur der Welle zwischen den Lagereinrichtungen 24, 25 oder, wie dargestellt, zwischen der Lagereinrichtung 25 und dem nächstliegenden Werkzeug 8 erfasst.

Zusätzlich kann ein Temperatursensor 34 zur Erfassung der Temperatur des Grundträgers vorgesehen sein. Weitere Temperatursensoren können an dem Maschinengestell 12 untergebracht sein, um dessen Temperaturänderungen und somit Dimensionsänderungen erfassen zu können.

Die Maschine 1 unterliegt der Steuerung einer Steuerungseinrichtung 35, die in Figur 3 schematisch veranschaulicht ist. Die Steuereinrichtung 35 erhält über eine Eingabeschnittstelle 36 Daten über die mit dem Schleif- und Erodierkopf 3 auszuführenden Bewegungen. Diese Daten sind beispielsweise in Form von Maschinensteueranweisungen gegeben, die Informationen über Wege und Zielpunkte der Positioniereinrichtungen 11, 17 und 19 enthalten.

Ausgangsseitig steuert die Steuereinrichtung 35 Antriebseinrichtungen 37 für die Positioniereinrichtungen 14, 17 und 19. Diese sind jeweils mit Sensoren 38 versehen, die die jeweilige Positionierposition erfassen und über eine IST-Wert-Schnittstelle 39 an die Steuereinrichtungen melden.

Die Steuereinrichtung 35 enthält einen Verarbeitungsblock 41, dem über eine Temperatursignalschnittstelle 42 alle Temperatursignale zugeführt sind. Insbesondere ist die Temperatursignalschnittstelle 42 mit dem Temperatursensor 26 und dem Temperatursensor 31 verbunden.

Der Verarbeitungsblock 41 enthält zumindest eine Zuordnungstabelle 43 oder ein entsprechendes Rechenmodul, das die erfassten Temperaturwerte des Wellenabschnitts 28 in die zugeordnete Temperaturdehnung des gesamten Wellenstummels zwischen der Lagereinrichtung 24 und dem Werkzeug 6 oder 7 umsetzt. Mit anderen Worten, die Zuordnungstabelle 43 bestimmt anhand des erfassten Temperaturwerts des Wellenabschnitts 28 die temperaturbedingte Verlagerung des Werkzeugs 6 und des Werkzeugs 7. Entsprechend kann die Zuordnungstabelle 43 anhand der von dem Temperatursensor 31 gelieferten Temperatursignale die temperaturbedingte Dehnung des Wellenabschnitts zwischen der Lagereinrichtung 24 und dem Werkzeug 8 bzw. 9 berechnen oder bestimmen. Die so bestimmten Längenänderungen der jeweiligen Wellenbereiche der Welle 5 werden in dem Verarbeitungsblock 41 mit dem über die Eingabeschnittstelle 36 erhaltenen Steuerwerten verrechnet, indem sie zu den Z-Positionierwerten vorzeichenrichtig addiert (d.h. z.B. addiert oder subtrahiert) werden. Somit wandelt der Verarbeitungsblock 41 die an der Eingabeschnittstelle 36 empfangenen Steuerwerte in Vorgabewerte um, die korrigierte Steuerwerte darstellen. Die Vorgabewerte werden nun in einem Komparatorblock 44 mit den von den Sensoren 38 gemessenen Positionen verglichen. Entsprechende Abweichungen Δ (X, Y, Z) werden an einen Ansteuerblock 45 gegeben, der die Antriebseinrichtungen 37 ansteuert.

Figur 2 veranschaulicht, wie sich der Abstand $l_1$ des Werkzeugs 7 mit einer Temperaturänderung $\Delta\vartheta$ von der Temperatur $\vartheta_1$ auf die Temperatur $\vartheta_2$ ändert. Die Längenänderung $\Delta l$ der Welle 5 ist zugleich die Änderung des Abstands von dem Wert $l_1$ auf den Wert $l_2$. Im einfachsten Fall nimmt die Steuereinrichtung 35 einen linearen Zusammenhang zwischen der Längenänderung $\Delta l$ und der Temperaturänderung $\Delta\vartheta$ an:

$$\Delta l = l_2 - l_1$$

$$\Delta\vartheta = \vartheta_2 - \vartheta_1$$

$$\Delta l \sim l_1 \cdot \Delta\vartheta$$

Mit einer stoffabhängigen Proportionalitätskonstanten $\alpha$ gilt

$$\Delta l \sim l_1\left(\vartheta_2 - \vartheta_1\right) = \alpha.$$

und

$$l_2 = l_1\left(1 + \alpha \cdot \Delta\vartheta\right).$$

Die insoweit beschriebene Maschine 1 arbeitet wie folgt:

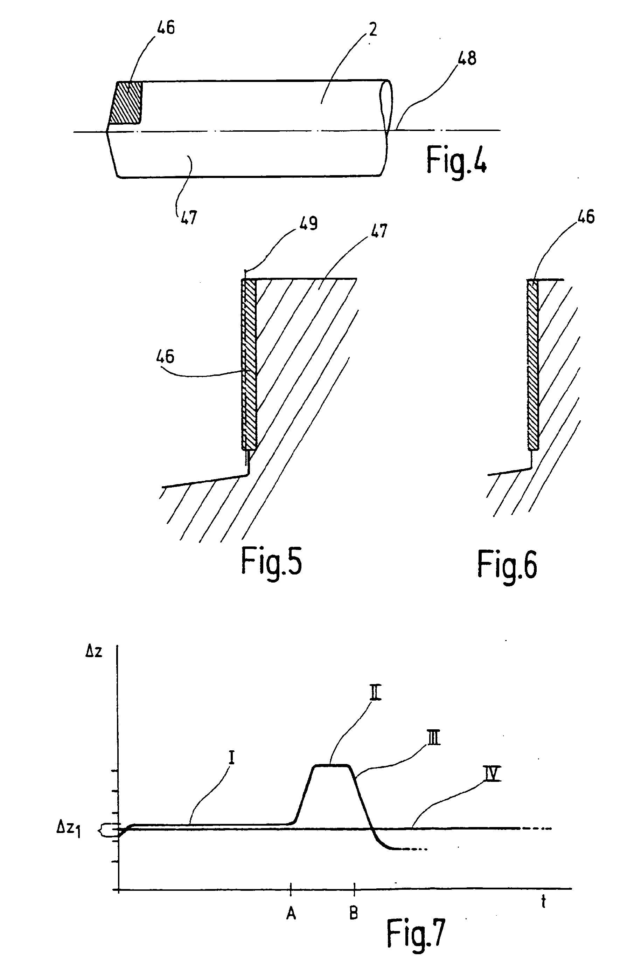

Es wird zur Veranschaulichung der Wirksamkeit der erfindungsgemäßen Maßnahme vorausgesetzt, dass das in Figur 4 schematisch veranschaulichte Werkzeug 2 sowohl elektroerodiert als auch geschliffen werden soll. Das Werkzeug 2 weist in seinem aktiven Bereich eine dünne Platte 46 aus diamantähnlichem Kohlenstoff auf. Diese ist an einem Werkzeugkörper 47 aus Werkzeugstahl befestigt. Bei derartigen Werkzeugen 2 handelt es sich um Präzisionswerkzeuge, deren Schneidkanten bis auf μm genau zu fertigen sind. Die Platte 46 kann nicht mit der gewünschten Genauigkeit an dem Werkzeugkörper 47 befestigt werden. Es ist deshalb eine Nachbearbeitung erforderlich, die die Maschine 1 übernimmt. Zur Veranschaulichung ist das Werkzeug 2 in den Figuren 5 und 6 in einer vergrößerten Ansicht mit Blickrichtung auf seine Spitze, d.h. parallel zu seiner Symmetrieachse 48 veranschaulicht.

Gemäß Figur 5 weist die Platte 46 zunächst ein Übermaß auf, das durch eine strichpunktierte Linie 49 veranschaulicht ist. Das Übermaß lässt sich nicht in einem Schleifverfahren rationell entfernen. Entsprechend wird der Schleif- und Erodierkopf so an die Flachseite der Platte 46 herangefahren, dass ein Erodierwerkzeug, beispielsweise das Werkzeug 9, in geringem Abstand zu der Flachseite der Platte 46 positioniert wird. Es wird nun ein elektroerosiver Abtragevorgang durchgeführt, in dem das Werkzeug 9 mit geringer Drehzahl, beispielsweise 200 Umdrehungen pro Minute, rotiert und ein entsprechender Strom zwischen dem Werkzeug 2 und dem Werkzeug 9 fließt. Zur Verdeutlichung der Erfindung wird nun zunächst angenommen, dass die Temperaturkompensation mittels der Sensoren 26, 31 außer Betrieb ist. Aufgrund der Drehung der Welle 5 und der allgemein in der Maschine 1 umgesetzten Leistung nimmt die Welle 5 eine Temperatur an, die zu einer Längenzunahme der Welle 5 führt, wie sie in Figur 7 durch einen Kurvenast I veranschaulicht ist. Solange die Erosivbearbeitung andauert - dies können mehrere Stunden sein - ändert sich an diesem Wert nicht viel.

Ist die Erosionsbearbeitung beendet, weist die Platte 46 die in Figur 6 veranschaulichte raue Oberfläche auf. Sie muss nun in einem Schleifvorgang geglättet werden. Dazu wird die Welle 5 des Schleif- und Erodierkopfs 3 auf eine Drehzahl von beispielsweise 3000 Umdrehungen beschleunigt und es wird ein Schleifwerkzeug, beispielsweise das Werkzeug 6 mit der Flachseite der Platte 46 in Eingriff gebracht, um einen z.B. mehrere Minuten lang dauernden Schleifvorgang durchzuführen. Dabei steigt aufgrund der umgesetzten Leistung die Temperatur der Welle 5, so dass die Längendehnung in Z-Richtung zunimmt, wie in Figur 7 in einer Zeitspanne A, B (Kurvenast II) veranschaulicht ist.

Nach Durchführung des Schleifvorgangs fällt die Temperatur der Welle 5 gemäß dem Kurvenast III wieder ab.

Diese Längenänderungen der Welle 5 in Z-Richtung führt zu einer verminderten Präzision an dem Werkzeug 2. Es wird deshalb die Temperatur der Welle 5 mit den Sensoren 26, 31 erfasst. In dem Zeitraum während des Erosionsbearbeitungsvorgangs, bei dem lediglich eine geringe Längenausdehnung $\Delta Z1$ zu verzeichnen war, wird die Ausdehnung auf einen Wert kompensiert, den über den gesamten Zeitraum der Erosionsbearbeitung konstant ist. Wird dann nach Durchlaufen des Zeitpunkts A der Schleifvorgang begonnen, wird die zunehmende Temperatur der Welle erfasst und es werden die Steuerwerte um entsprechende Korrekturbeträge erhöht oder vermindert. Dadurch wird eine temperaturbedingte Verlagerung des Werkzeugs vermieden und die Positionierung des Werkzeugs bleibt konstant. Dies ist in Figur 7 durch die gerade IV veranschaulicht.

Unabhängig von dem vorgestellten Ausführungsbeispiel, das von einer kombinierten Schleif- und Erodiermaschine ausgeht, kann die Erfindung auch bei einer reinen Schleifmaschine angewendet werden. Sie hat auch hier erhebliche Vorteile, indem Temperaturänderungen der Maschine, wie sie sich durch Änderung der Temperatur des Kühl-Schmiermittels über längere Zeiträume hinweg ergeben können, kompensiert werden.

Eine Maschine zur Bearbeitung eines Werkstücks mit wenigstens einem umlaufenden oder drehenden Werkzeug weist eine Arbeitsspindel mit einer Welle 5 auf, deren Temperatur mittels wenigstens eines Temperatursensors 26 überwacht wird. Die Temperatur wird dabei berührungslos erfasst. Der Sensor 26 ist vorzugsweise ein strahlungsempfindlicher Sensor, der die von der Welle 5 abgegebene Temperaturstrahlung erfasst. Die Steuereinrichtung 35 der Maschine 1 berücksichtigt die sich durch die Temperaturänderungen der Welle 5 ergebenden Temperaturdehnungen derselben beim Ansteuern der Positionierantriebe. Letztere dienen dazu, ein von der Welle 5 getragenes Werkzeug 6 in Bezug auf das Werkstück 2 zu positionieren. Es wird somit eine Bearbeitungsgenauigkeit erreicht, die von der Temperatur und Temperaturänderungen der Maschine 1 insgesamt, von Temperaturänderungen des Kühl-Schmiermittels und Temperaturänderungen des Werkzeugs 6 und der Welle 5 unabhängig ist., die von der an der Bearbeitungsstelle umgesetzten Leistung herrühren können.

**Patentansprüche**

1. Maschine (1) zur Bearbeitung eines Werkstücks (2) mit wenigstens einem umlaufenden oder drehenden Werkzeug (6), mit einer Arbeitspindel (4), zu der eine Welle (5) gehört, die in einer Halterung (21) drehbar gelagert und drehend angetrieben ist, mit einer Spanneinrichtung (18), die zum Halten des Werkstücks (2) eingerichtet ist, mit einer Positioniereinrichtung (11), mittels derer die Arbeisspindel (4) und die Spanneinrichtung (18) in Bezug aufeinander zu positionieren und zu verfahren sind, mit einer Temperatur-Erfassungseinrichtung (26, 31), die ein die Temperatur der Welle (5) an wenigstens einer Stelle (28) kennzeichnendes Signal erzeugt, mit einer Steuereinrichtung (35), die wenigstens die Positioniereinrichtung (11) gemäß Steuerwerten steuert, die aus Vorgabewerten ermittelt sind, und die mit der Temperatur-Erfassungseinrichtung (26, 31) verbunden ist, um das die Temperatur kennzeichnende Signal zu erhalten und anhand des Signals die Steuerwerte in die Vorgabewerte zu transformieren, **dadurch gekennzeichnet, dass** die Temperatur-Erfassungseinrichtung (26, 31) berührungslos arbeitet und wenigsten einen Temperatursensor (26) aufweist, der die von der Welle (5) abgegebene Wärmestrahlung erfasst und der Temperatursensor (26) so angeordnet ist, dass sich ein Wellenabschnitt (28) in dem Erfassungsbereich (27) befindet und dass die Welle (5) wenigstens im Bereich der im Erfassungbereich (27) liegenden Wellenabschnitte (28) eine reflexionsarme Oberfläche aufweist.

2. Maschine nach Anspruch 1, **dadurch gekennzeichnet, dass** der Temperatursensor (26) einen räumlichen Erfassungsbereich (27) hat, innerhalb dessen Wärmestrahlung erfasst wird.

3. Maschine nach Anspruch 2, **dadurch gekennzeichnet, dass** der in dem Erfassungsbereich (27) liegende Wellenabschnitt (28) zwischen einem von der Welle (5) getragenen Arbeitswerkzeug (6) und einer Lagereinrichtung (24) liegt.

4. Maschine nach Anspruch 2, **dadurch gekennzeichnet, dass** der in dem Erfassungsbereich (27) liegende Wellenabschnitt (28) zwischen zwei zur Lagerung der Welle (5) vorgesehenen Lagereinrichtungen (24, 25) liegt.

5. Maschine nach Anspruch 1, **dadurch gekennzeichnet, dass** zur Lagerung der Welle (5) ein Festlager (24), das keine Axialbewegung der Welle (5) zulässt, sowie ein Loslager (25) gehört, das eine Axialbewegung der Welle (5) zulässt.

6. Maschine nach Anspruch 1, **dadurch gekennzeichnet, dass** zu der Erfassungseinrichtung zwei Temperatursensoren (26, 31) gehören.

7. Maschine nach Anspruch 6, **dadurch gekennzeichnet, dass** das Festlager (24) zwischen den Temperatursensoren (26, 31) angeordnet ist.

8. Maschine nach Anspruch 8, **dadurch gekennzeichnet, dass** die Welle (5) mit einer Oberflächenbeschichtung versehen ist.

9. Maschine nach Anspruch 6, **dadurch gekennzeichnet, dass** die Welle (5) brüniert ist.

10. Maschine nach Anspruch 1, **dadurch gekennzeichnet, dass** die Positioniereinrichtung (11) eine Positionssensoreinrichtung (38) enthält, mit der die Relativposition der Spanneinrichtung (18) und der Arbeitsspindel (5) erfassbar ist und die Positions-Ist-Signale erzeugt.

11. Maschine nach Anspruch 11, **dadurch gekennzeichnet, dass** die Position der Arbeitsspindel (5) durch die Position einer axial unbeweglichen Lagereinrichtung (24) bestimmt ist.

**12.** Maschine nach Anspruch 11, **dadurch gekennzeichnet, dass** die Steuereinrichtung (35) die Arbeitsspindel (5) gemäß der Steuerwerte und der Positions-Ist-Signale steuert.

**13.** Maschine nach Anspruch 12, **dadurch gekennzeichnet, dass** die Steuereinrichtung (35) die Positions-Ist-Signale bestimmt, indem sie zu der gemessenen Position der Lagereinrichtung (24) die anhand der gemessen Temperatur kompensierten Abmessungen des zwischen der Lagereinrichtung (24) und dem Werkzeug (6) vorhandenen Wellenabschnitts sowie die Abmessungen des Werkzeugs (6) addiert.

**14.** Maschine nach Anspruch 14, **dadurch gekennzeichnet, dass** die Steuereinrichtung (35) zusätzlich die Abmessungen des Werkzeugs (6) temperaturkompensiert.

**15.** Maschine nach Anspruch 1, **dadurch gekennzeichnet, dass** zu der Maschine (1) ein Maschinengestell (12) Temperatursensoren aufweist, die mit der Steuereinrichtung verbunden sind.

**16.** Maschine nach Anspruch 1, **dadurch gekennzeichnet, dass** die Arbeitsspindel (4) wenigstens ein Schleifwerkzeug (6) trägt.

**17.** Maschine nach Anspruch 1, **dadurch gekennzeichnet, dass** die Arbeitsspindel (4) wenigstens ein Erodierwerkzeug (9) trägt.

**Claims**

**1.** Machine (1) for machining a workpiece (2) with at least one revolving or rotating tool (6), with a work spindle (4) with an associated shaft (5), which is rotatably disposed and rotationally driven in a mounting (21),
with a clamping means (18) fitted to hold the workpiece (2),
with a positioning means (11), by means of which the work spindle (4) and the clamping means (18) can be positioned and moved relative to one another,
with a temperature sensing means (26, 31), which generates a signal identifying the temperature of the shaft (5) at at least one location (28),
with a control means (35), which controls at least the positioning means (11) in accordance with control values determined from given values, and which is connected to the temperature sensing means (26, 31) in order to receive the signal identifying the temperature and to convert the control values into the given values on the basis of the signal, **characterised in that**
the temperature sensing means (26, 31) operates in a non-contact manner and has at least one temperature sensor (26), which detects the thermal radiation given off by the shaft (5), and the temperature sensor (26) is arranged so that a shaft section (28) is located in the detection region (27), and that the shaft (5) has a low-reflection surface at least in the region of the shaft sections (28) lying in the detection region (27).

**2.** Machine according to Claim 1, **characterised in that** the temperature sensor (26) has a spatial detection region (27), within which thermal radiation is detected.

**3.** Machine according to Claim 2, **characterised in that** the shaft section (28) located in the detection region (27) lies between a work tool (6) held by the shaft (5) and a bearing means (24).

**4.** Machine according to Claim 2, **characterised in that** the shaft section (28) located in the detection region (27) lies between two bearing means (24, 25) provided for mounting the shaft (5).

**5.** Machine according to Claim 1, **characterised in that** a fixed bearing (24), which does not permit any axial movement of the shaft (5), and also a loose bearing (25), which permits an axial movement of the shaft (5), belong to the bearing means of the shaft (5).

**6.** Machine according to Claim 1, **characterised in that** the detection means includes two temperature sensors (26, 31).

**7.** Machine according to Claim 6, **characterised in that** the fixed bearing (24) is arranged between the temperature sensors (26, 31).

**8.** Machine according to Claim 8?, **characterised in that** the shaft (5) is provided with a surface coating.

**9.** Machine according to Claim 6, **characterised in that** the shaft (5) is burnished.

**10.** Machine according to Claim 1, **characterised in that** the positioning means (11) includes a position sensor arrangement (38), with which the relative position of the clamping means (18) and the work spindle (5) is detectable and which generates actual position signals.

**11.** Machine according to Claim 11?, **characterised in that** the position of the work spindle (5) is determined by the position of an axially immovable bearing means (24).

**12.** Machine according to Claim 11, **characterised in that** the control means (35) controls the work spindle (5) in accordance with control values and the actual position signals.

**13.** Machine according to Claim 12, **characterised in that** the control means (35) determines the actual position signals by adding the dimensions of the shaft section located between the bearing means (24) and the tool (6) compensated on the basis the measured temperature and also adding the dimensions of the tool (6) to the measured position of the bearing means (24).

**14.** Machine according to Claim 14?, **characterised in that** the control means (35) additionally compensates the dimensions of the tool (6) with respect to temperature.

**15.** Machine according to Claim 1, **characterised in that** the machine (1) includes a machine frame (12) having temperature sensors, which are connected to the control means.

**16.** Machine according to Claim 1, **characterised in that** the work spindle (4) holds at least one grinding tool (6).

**17.** Machine according to Claim 1, **characterised in that** the work spindle (4) supports at least one electro-erosion tool (9).

**Revendications**

**1.** Machine (1) pour l'usinage d'une pièce (2) comportant

    - au moins un outil rotatif (6),
    - une broche de travail (4) à laquelle appartient un arbre (5) qui peut tourner dans un support (21) et qui est entraîné en rotation,
    - un dispositif de serrage (18) conçu pour maintenir la pièce (2),
    - un dispositif de positionnement (11) pour positionner l'un par rapport à l'autre et déplacer la broche de travail (4) et le dispositif de serrage (18),
    - un dispositif de saisie de température (26, 31) qui produit un signal caractérisant la température de l'arbre (5) en au moins un point (28),
    - un dispositif de commande (35) qui pilote le dispositif de positionnement (11) selon des valeurs de commande établies à partir de valeurs de consigne et qui est relié au dispositif de saisie de température (26, 31) pour recevoir le signal caractérisant la température et au moyen de ce signal, transformer les valeurs de commande en des valeurs de consigne,

**caractérisée en ce que** les dispositifs de saisie de température (26, 31) fonctionnent sans contact et présentent au moins un capteur de température (26) qui saisit le rayonnement thermique délivré par l'arbre (5), ce capteur de température (26) étant disposé de manière qu'une section d'arbre (28) se trouve dans la zone de saisie (27) de ce capteur et que l'arbre (5) présente au moins dans cette section (28) qui se trouve dans la zone de saisie (27) une surface peu réfléchissante.

**2.** Machine selon la revendication 1, **caractérisée en ce que** le capteur de température (26) a un domaine spatial de saisie (27) à l'intérieur duquel il saisit le rayonnement thermique.

**3.** Machine selon la revendication 2, **caractérisée en ce que** la section d'arbre (28) qui est dans la zone de saisie (27), se trouve entre un outil de travail (6) porté par l'arbre (5) et un dispositif de palier (24).

**4.** Machine selon la revendication 2, **caractérisée en ce que** la section d'arbre (28) qui est dans la zone de saisie (27), se trouve entre deux dispositifs de palier (24, 25) prévus pour le montage de l'arbre (5).

**5.** Machine selon la revendication 1, **caractérisée en ce que** pour le montage de l'arbre (5), il est prévu un palier fixe (24) n'autorisant aucun déplacement axial de l'arbre (5), ainsi qu'un palier libre (25) autorisant un mouvement axial de l'arbre (5).

**6.** Machine selon la revendication 1, **caractérisée en ce que** deux capteurs de température (26, 27) font partie du dispositif de saisie.

**7.** Machine selon la revendication 6, **caractérisée en ce que** le palier fixe (24) se trouve entre les capteurs de température (26, 31).

**8.** Machine selon la revendication 1, **caractérisée en ce que** l'arbre (5) porte un revêtement superficiel.

**9.** Machine selon la revendication 8, **caractérisée en ce que** l'arbre (5) est bruni.

**10.** Machine selon la revendication 1, **caractérisée en ce que** le dispositif de positionnement (11) comprend un dispositif à capteurs de position (38) qui permet de saisir la position relative du dispositif de serrage (18) et de la broche de travail (5) et qui produit les signaux de position réelle.

**11.** Machine selon la revendication 10, **caractérisée en ce que** la position de la broche de travail (5) est définie par la position d'un dispositif de palier (24) qui ne peut se déplacer axialement.

**12.** Machine selon la revendication 11, **caractérisée en ce que** le dispositif de commande (35) pilote la broche de travail (5) en fonction des valeurs de commande et des signaux de position réelle.

**13.** Machine selon la revendication 12, **caractérisée en ce que** le dispositif de commande (35) définit les signaux de position réelle en additionnant à la position mesurée du dispositif de palier (24), les dimensions compensées au moyen de la température mesurée de la section d'arbre située entre le dispositif de palier (24) et l'outil (6) ainsi que les dimensions de l'outil (6).

**14.** Machine selon la revendication 13, **caractérisée en ce que** le dispositif de commande (35) compense de plus en fonction de la température les dimensions de l'outil (6).

**15.** Machine selon la revendication 1, **caractérisée en ce que** sur la machine (1) le bâti de machine (12) présente des capteurs de température qui sont reliés au dispositif de commande.

**16.** Machine selon la revendication 1, **caractérisé en ce que** la broche de travail (4) porte au moins un outil de rectification (6).

**17.** Machine selon la revendication 16, **caractérisée en ce que** la broche de travail (4) porte au moins un outil d'érosion.

Fig.1

Fig.2

Fig.3

Fig.4

Fig.5

Fig.6

Fig.7